# EUROPÄISCHE PATENTSCHRIFT

(11) **EP 1 452 369 B1**
(45) Veröffentlichungstag und Bekanntmachung des Hinweises auf die Patenterteilung: **07.02.2007**
(21) Anmeldenummer: 03027597.8
(22) Anmeldetag: 02.12.2003
(51) Int. Cl.: B60J 7/19, B60J 7/185, B60J 7/10

(54) **Verriegelungsvorrichtung für ein abnehmbares KFZ-Dach**
Locking arrangement for a detachable vehicle roof
Dispositif de verrouillage pour un toit amovible de véhicule

(30) Priorität: 28.02.2003 DE 10308765
(43) Veröffentlichungstag der Anmeldung: 01.09.2004
(73) Patentinhaber: Dr.Ing. h.c.F. Porsche Aktiengesellschaft, 70435 Stuttgart (DE)
(72) Erfinder: Scholz, Andre, 75446 Wiernsheim (DE); Armbruster, Reiner, 75417 Mühlacker (DE); Braun, Wolfgang, 73061 Ebersbach (DE)

(56) Entgegenhaltungen:
- DE-A1- 4 137 344
- US-A- 5 360 254
- US-A1- 2004 155 490
- US-B1- 6 398 327
- PATENT ABSTRACTS OF JAPAN Bd. 018, Nr. 503 (M-1677), 21. September 1994 (1994-09-21) -& JP 06 171373 A (SUZUKI MOTOR CORP), 21. Juni 1994 (1994-06-21)

## Beschreibung

Die Erfindung bezieht sich auf eine Verriegelungsvorrichtung für ein abnehmbares Dach eines Kraftfahrzeugs nach dem Oberbegriff des Patentanspruchs 1.

Eine bekannte Verriegelungsvorrichtung der eingangs beschriebenen Gattung, DE 34 13 379 C2, weist an einem Klappverdeck ein Verriegelungsorgan und an einem Windschutzscheibenrahmen eine Aufnahme für besagtes Verriegelungsorgan auf. Die Aufnahme ist an einer Halteplatte angebracht und nach Art einer Kulissenführung ausgeführt, die zu einem Fahrgastraum hin offen und in der Offenstellung des Klappverdecks unabgedeckt ist.

Aus der DE 199 46 926 C1 geht ein Fahrzeugdach mit einem beweglichen Dachelement hervor, das mit einem Längsträger entlang von einem seitlichen Dachholm verläuft. Der Längsträger ist im Querschnitt U-förmig ausgebildet, wobei dessen offene Seite zu einem Fahrgastraum hin gerichtet ist. Diese offene Seite ist mittels einer beweglichen Blende abgedeckt, die über eine Art Scharnier an einem Schenkel des U-förmigen Querschnitts angelenkt ist.

Aufgabe der Erfindung ist es an einer Aufnahme einer Verriegelungsvorrichtung für ein abnehmbares Dach eines Kraftfahrzeugs solche Vorkehrungen zu treffen, dass bei vom Fahrzeug gelöstem Dach zum einen die Aufnahme gegen Eindringen von funktionsstörenden Ablagerungen und zum anderen Insassen des Kraftfahrzeugs vor von der Aufnahme ausgehenden Abrieb- und Fettpartikeln geschützt sind.

Diese Aufgabe wird nach der Erfindung durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass bei abgenommenem Dach mit dem beweglichen Abdeckelement in der zweiten Stellung die Aufnahme in der Halteplatte verkleidbar ist, so dass etwaige Abrieb- und /oder Fettpartikel, die von der Aufnahme abgesondert werden, die Insassen des Kraftfahrzeugs bspw. deren Kleidungsstücke nicht beeinträchtigen. Ebenso wird durch das als Schieber an der Halteplatte ausgeführte Abdeckelement verhindert, dass in die Aufnahme unerwünschte Ablagerungen gelangen, die zu Funktionsstörungen der Verschlusseinrichtung führen. Mit dem Schieber lassen sich auch stilistische Optimierungen verwirklichen. Schließlich stellen die Führungseinrichtungen ein funktionsgerechtes Zusammenwirken des Schiebers mit der Halteplatte sicher, und sie lassen sich fertigungstechnisch auf einfache Weise realisieren.

In der Zeichnung wird ein Ausführungsbeispiel der Erfindung gezeigt, das nachstehend näher beschrieben ist.

Es zeigen
- Fig. 1: einen Teillängsschnitt durch einen Aufbau eines Kraftfahrzeugs im Bereich eines abnehmbaren Dachs,

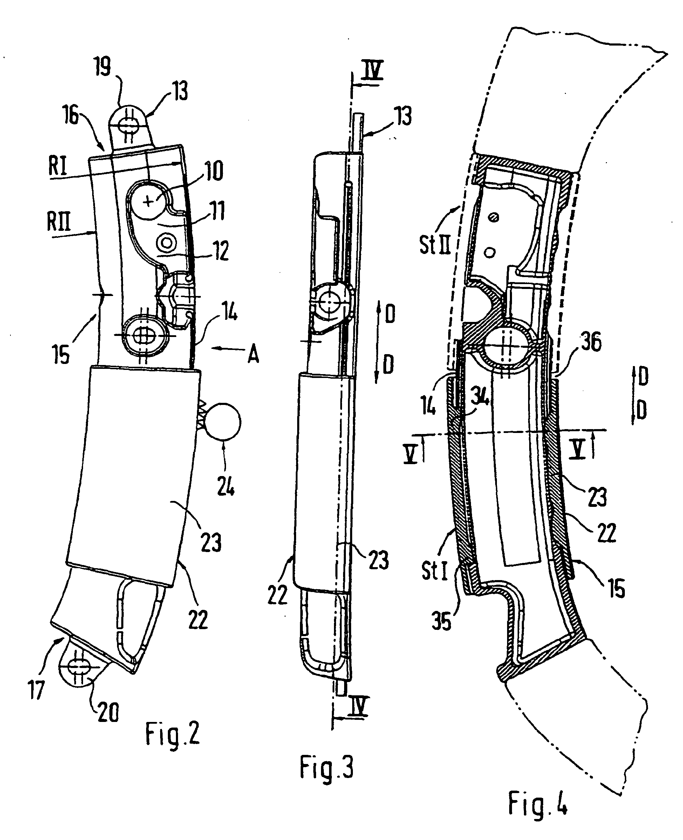

- Fig. 2: einen Schnitt nach der Linie II-II der Fig.1,
- Fig. 3: eine Ansicht in Pfeilrichtung A der Fig. 2,
- Fig. 4: einen Schnitt nach der Linie IV-IV der Fig. 3,
- Fig. 5: einen Schnitt nach der Linie V-V der Fig. 4.

Von einem Kraftfahrzeug 1 sind lediglich Teilbereiche eines Aufbaus 2 dargestellt, der ein abnehmbares in einem Stauraum unterbringbares Dach 3 und feststehende Strukturen in Form eines Windschutzscheibenrahmens - nicht gezeigt - und einen sich quer zur Fahrzeuglängsrichtung B-B erstreckenden Rollbügels 4 besitzt. Das bspw. aus Kunststoff hergestellte formsteife Dach 3 überwölbt einen Fahrgastraum 5 und liegt mit einer hinteren Dachwand 6 auf einem Dichtkörper 7 auf, der in einer Rinne 8 des Rollbügels 4 ruht. Zwischen Dach 3 und Rollbügel 4 ist eine Verschlussvorrichtung 9 wirksam, die das Dach 3 am Rollbügel 4 in Lage hält und mit einem Verschlussorgan 10 und einer Aufnahme 11 versehen ist; eine entsprechende Ausbildung ist der vorstehend erwähnten DE 34 13 379 C2 zu entnehmen. Das Verschlussorgan 10 arbeitet mit der als Kulisse 12 konstruierten Aufnahme 11 zusammen, die in eine Halteplatte 13 eingearbeitet und zum Fahrgastraum 5 hin ausgerichtet, d.h. offen und auch bei vom Kraftfahrzeug 1 gelöstem Dach 3 sichtbar ist. Die quer zur Fahrzeuglängsrichtung B-B verlaufende Halteplatte 13 weist eine längliche bspw. rechteckige Grundform mit einer oberen Längsseite 14 und einer unteren Längsseite 15 auf, die von Querseiten 16,17 begrenzt werden. Darüber hinaus ist die Halteplatte 13 unter Vermittlung von Schrauben 18, die Befestigungsaugen 19,20 an den Querseiten 16,17 bzw. eine Durchgangsöffnung 21 zwischen den Befestigungsaugen 19,20 der besagten Halteplatte 13 durchdringen, am Rollbügel 4 befestigt.

An der Halteplatte 13 ist ein Abdeckelement 22 vorgesehen, das aus einer ersten Stellung Stl in eine zweite Stellung Stll und vice versa bewegbar ist, und zwar in Richtung D-D des Abdeckelements 22, die quer zur Fahrzeuglängsrichtung B-B verläuft. Dabei verkleidet das Abdeckelement 22 in der zweiten Stellung Stll die Kulisse 12 bzw. die Aufnahme 13 für das Verschlussorgan 10 in vollem Umfang, und es ist als Schieber 23 ausgeführt, der im Ausführungsbeispiel manuell betätigbar ist. Denkbar ist aber auch eine motorische Bewegung des Abdeckelements 22 bspw. mittels eines Elektromotors 24.

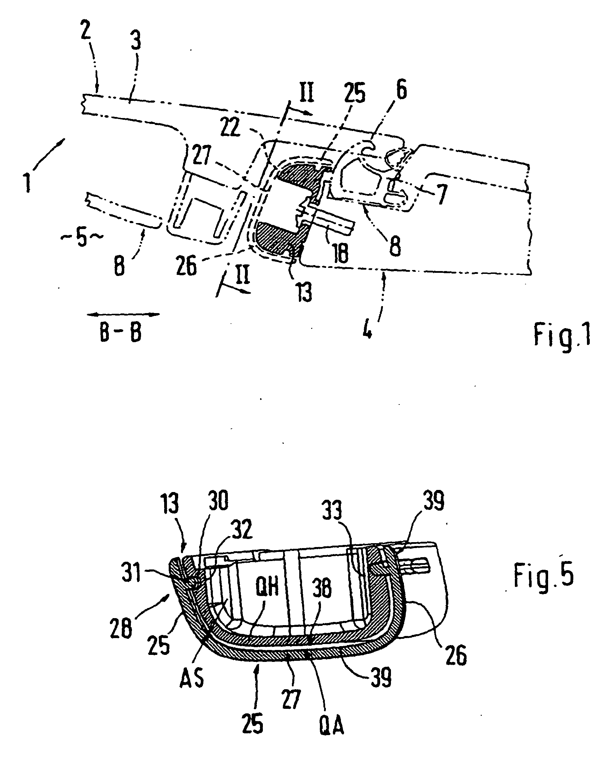

Aus den Figuren 1 und 5 ist ersichtlich, dass die aus Metall hergestellte Halteplatte 13 einen U-förmigen Querschnitt QH aufweist, der von einem korrespondierenden Querschnitt QA des Abdeckelements 22 umgeben ist. Der U-förmige Querschnitt QA des aus Kunststoff bestehenden Abdeckelements 22 besitzt Schenkel 25, 26 zwischen denen sich ein Steg 27 erstreckt. Der Schieber 23 arbeitet unter Vermittlung von Führungseinrichtungen 28, 29 mit der Halteplatte 13 zusammen. Jede Führungseinrichtung bspw. 28 besitzt eine Führungsausnehmung 30 und einen in letztere eingreifenden Führungszapfen 31, die an der Halteplatte 13 bzw. an dem Schieber 23 vorgesehen sind. Aufgrund der gestalterischen Lösung der U-förmigem Querschnitte QH und QA, sind je eine Führungseinrichtung nämlich 28 und 29 zwischen den Schenkeln 25 bzw. 26 und benachbarten Bereichen 32, 33 der Halteplatte 13 angeordnet.

## Patentansprüche

1. Verriegelungsvorrichtung für ein abnehmbares Dach eines Kraftfahrzeugs, das sich zwischen feststehenden Strukturen bspw. einem Windschutzscheibenrahmen und einem Rollbügel eines Aufbaus erstreckt, welche Verriegelungsvorrichtung einen Verriegelungsbolzen am Dach umfasst, der mit einer zu einem Fahrgastraum hin ausgerichteten, bspw. am Rollbügel befestigten und in einer Halteplatte vorgesehenen Aufnahme zusammenarbeitet, **dadurch gekennzeichnet, dass** die am Rollbügel (4) befestigte Halteplatte (13) ein Abdeckelement (22) umfasst, das aus einer ersten Stellung (Stl) in eine zweite die Aufnahme (11) der Halteplatte (13) verkleidende Stellung (Stll) und vice versa bewegbar ist.

2. Verriegelungsvorrichtung nach Anspruch 1, **dadurch gekennzeichnet, dass** das Abdeckelement (22) an der Halteplatte (13) als Schieber (23) ausgebildet ist.

3. Verriegelungsvorrichtung nach Anspruch 1, **dadurch gekennzeichnet, dass** die Halteplatte (13) einen etwa U-förmigen Querschnitt (QH) aufweist, der von einem korrespondierenden Schenkel (25,26) und einen Steg (27) aufweisenden Querschnitt (QA) des Abdeckelements (22) umgeben ist.

4. Verriegelungsvorrichtung nach einem oder mehreren der vorangehenden Ansprüche, **dadurch gekennzeichnet, dass** das Abdeckelement (22) unter Vermittlung von einer oder mehreren Führungseinrichtungen (28,29) mit der Halteplatte (13) zusammenarbeitet.

5. Verriegelungsvorrichtung nach Anspruch 4, **dadurch gekennzeichnet, dass** jede Führungseinrichtung (z.B. 28) eine Führungsausnehmung (30) und einen mit besagter Führungsausnehmung zusammenwirkendem Führungszapfen (31) aufweist.

6. Verriegelungsvorrichtung nach Anspruch 5, **dadurch gekennzeichnet, dass** die Führungsausnehmung (30) an der Halteplatte (13) und der Führungszapfen (31) an dem Abdeckelement (22) vorgesehen sind.

7. Verriegelungsvorrichtung nach einem oder mehreren der vorangehenden Ansprüche, **dadurch gekennzeichnet, dass** je eine Führungseinrichtung (28 bzw. 29) zwischen den Schenkeln (25,26) des Abdeckelements (22) und der Halteplatte (13) vorgesehen ist.

8. Verriegelungsvorrichtung nach einem oder mehren der vorangehenden Ansprüche, **dadurch gekennzeichnet, dass** die Führungszapfen (31) nur über bspw. beabstandete Teilabschnitte (34 und 35) der Länge des Abdeckelements (22) vorgesehen sind.

9. Verriegelungsvorrichtung nach einem oder mehreren der vorangehenden Ansprüche, **dadurch gekennzeichnet, dass** zwischen der Außenseite (38) des Querschnitts (QH) der Halteplatte (13) und der Innenseite (39) des Querschnitts (QA) ein definierter Abstand vorgesehen ist.

10. Verriegelungsvorrichtung nach einem oder mehreren der vorangehenden Ansprüche, **dadurch gekennzeichnet, dass** eine obere Längsseite (14) und eine untere Längsseite (15) der Halteplatte (13) auf Kreisbahnen liegen, wobei die Schenkel (25,26) des Abdeckelements (22) den besagten Kreisbahnen folgen.

11. Verriegelungsvorrichtung nach den Ansprüchen 1 und 2, **dadurch gekennzeichnet, dass** das Abdeckelement (22) aus Kunststoff, Metall oder dergl. besteht.

12. Verriegelungseinrichtung nach Anspruch 1, **dadurch gekennzeichnet, dass** die Bewegung des Abdeckelements (22) manuell und/oder motorisch erfolgt.

## Claims

1. A locking device for a detachable vehicle roof extending between fixed structures, for example a windscreen frame and a roll bar of a body, which locking device comprises a locking bolt arranged on the roof and co-operating with a receiver which is orientated towards a passenger compartment, for example is fixed to the roll bar and is provided in a holding plate, **characterised in that** the holding plate (13) fixed to the roll bar (4) comprises a covering member (22) which is movable from a first position (StI) into a second position (StII) in which it covers the receiver (11) of the holding plate (13) and vice versa.

2. A locking device according to claim 1, **characterised in that** the covering member (22) on the holding plate (13) is formed as a slider (23).

3. A locking device according to claim 1, **characterised in that** the holding plate (13) has an approximately U-shaped cross-section (QH) which is surrounded by a corresponding cross-section (QA) of the covering member (22) comprising arms (25, 26) and a crosspiece (27).

4. A locking device according to one or more of the preceding claims, **characterised in that** the covering member (22) co-operates with the holding plate (13) by means of one or more guide devices (28, 29).

5. A locking device according to claim 4, **characterised in that** each guide device (e.g. 28) has a guide recess (30) and a guide pin (31) co-operating with said guide recess.

6. A locking device according to claim 5, **characterised in that** the guide recess (30) is provided in the holding plate (13) and the guide pin (31) is provided on the covering member (22).

7. A locking device according to one or more of the preceding claims, **characterised in that** each guide device (28, 29) is provided between the arms (25, 26) of the covering member (22) and the holding plate (13).

8. A locking device according to one or more of the preceding claims, **characterised in that** the guide pins (31) are only provided over e.g. spaced portions (34 and 35) of the length of the covering member (22).

9. A locking device according to one or more of the preceding claims, **characterised in that** defined spacing is provided between the outside (38) of the cross-section (QH) of the holding plate (13) and the inside (39) of the cross-section (QA).

10. A locking device according to one or more of the preceding claims, **characterised in that** an upper longitudinal side (14) and a lower longitudinal side (15) of the holding plate (13) lie on circular paths, wherein the arms (25, 26) of the covering member (22) follow said circular paths.

11. A locking device according to claims 1 and 2, **characterised in that** the covering member (22) comprises plastics, metal or the like.

12. A locking device according to claim 1, **characterised in that** the movement of the covering member (22) is effected manually or by a motor.

## Revendications

1. Dispositif de verrouillage pour un toit amovible de véhicule s'étendant entre les structures fixes, par exemple un cadre de pare-brise, et un arceau de sécurité d'une structure, lequel dispositif de verrouillage comprenant un téton de verrouillage sur le toit qui interagit avec un logement dirigé vers un habitacle, par exemple fixé au niveau de l'arceau de sécurité et placé dans une plaque de maintien, **caractérisé en ce que** la plaque de maintien (13) fixée sur l'arceau de sécurité (4) comprend un élément couvrant (22) qui peut se déplacer d'une première position (StI) dans une deuxième position (StII) recouvrant le logement (11) de la plaque de maintien (13) et vice versa.

2. Dispositif de verrouillage selon la revendication 1, **caractérisé en ce que** l'élément couvrant (22) se présente, au niveau de la plaque de maintien (13), sous forme de coulisseau (23).

3. Dispositif de verrouillage selon la revendication 1, **caractérisé en ce que** la plaque de maintien (13) présente une section transversale (QH) en U, entourée d'une section transversale (QA) correspondante de l'élément couvrant (22) présentant un bras (25, 26) et une entretoise (27).

4. Dispositif de verrouillage selon l'une ou plusieurs des revendications précédentes, **caractérisé en ce que** l'élément couvrant (22) interagit avec la plaque de maintien (13) par l'intermédiaire d'un ou de plusieurs dispositifs de guidage (28, 29).

5. Dispositif de verrouillage selon la revendication 4, **caractérisé en ce que** chaque dispositif de guidage (par exemple 28) présente un évidement de guidage (30) et un téton de guidage (31) interagissant avec l'évidement de guidage concerné.

6. Dispositif de verrouillage selon la revendication 5, **caractérisé en ce que** l'évidement de guidage (30) est placé sur la plaque de maintien (13) et téton de guidage (31) est placé sur l'élément couvrant (22).

7. Dispositif de verrouillage selon l'une ou plusieurs des revendications précédentes, **caractérisé en ce que** chacun des dispositifs de guidage (28 ou 29) est placé entre les bras (25, 26) de l'élément couvrant (22) et de la plaque de maintien (13).

8. Dispositif de verrouillage selon l'une ou plusieurs des revendications précédentes, **caractérisé en ce que** les tétons de guidage (31) sont uniquement placés sur par exemple les segments partiels (34 et 35) espacés de la longueur de l'élément couvrant (22).

9. Dispositif de verrouillage selon l'une ou plusieurs des revendications précédentes, **caractérisé en ce qu'**il y a une distance définie entre le côté extérieur (38) de la section transversale (QH) de la plaque de maintien (13) et le côté intérieur (39) de la section transversale (QA).

10. Dispositif de verrouillage selon l'une ou plusieurs des revendications précédentes, **caractérisé en ce qu'**un côté longitudinal supérieur (14) et un côté longitudinal inférieur (15) de la plaque de maintien (13) se situent sur des trajectoires circulaires, sachant que les bras (25, 26) de l'élément couvrant (22) suivent les trajectoires circulaires concernées.

11. Dispositif de verrouillage selon les revendications 1 et 2, **caractérisé en ce que** l'élément couvrant (22) est constitué de matière synthétique, de métal ou d'une matière de ce type.

12. Dispositif de verrouillage selon la revendication 1, **caractérisé en ce que** le déplacement de l'élément couvrant (22) s'effectue manuellement et/ou à l'aide d'un moteur.
